# EUROPEAN PATENT APPLICATION

(11) **EP 1 939 765 A2**
(43) Date of publication of application: **02.07.2008**
(21) Application number: 07024454.6
(22) Date of filing: 17.12.2007
(51) Int. Cl.: G06F 17/30

(54) **Data retrieval method and system**

(30) Priority: 15.12.2006 US 875133 P
(71) Applicant: Multitel ASBL, 7000 Mons (BE); Meessen, Jérôme, 1348 Louvain-La-Neuve (BE); Coulanges, Matthieu, 59300 Valenciennes (FR)
(72) Inventor: Meessen, Jérôme, 1348 Louvain-La-Neuve (BE); Coulanges, Matthiue, 59300 Valenciennes (FR)
(74) Representative: pronovem

(57) **Abstract**

The present invention relates to a method for improved retrieval of a set of data represented with at least two representation levels, said set of data comprising at least two data subsets, said method comprising the steps of:
a. Receiving a request for retrieval,
b. Creating a ranking of said at least two data subsets based on said request,
c. Selecting for each data subset a data subset representation level among said at least two representation levels in accordance with said ranking,
d. Retrieving said data subsets with said selected representation level.

## Description

### Field of the Invention

The present invention is related to a method and a system in the field of content-based data retrieval.

### State of the Art

In recent years, searching and indexing techniques for multimedia data are getting more and more attention in the area of multimedia databases.

Content-based video retrieval often starts by selecting, indexing or annotating video frames or frame regions representative of the different scenes or shots of the video sequences. Once this key-frame pre-processing is achieved, the retrieval session is comparable to a content-based still image retrieval session. The indexation consists in describing each key-frame, its sub-regions, scenes, shot or sequence using features, that may be visual (like colour histogram or texture information), humanly understandable (like textual annotations) and/or video specific (like global motion, etc).

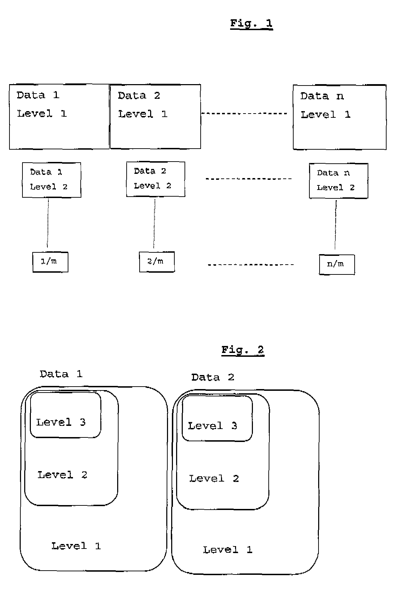

The goal of a retrieval system is to identify and present to the user the data corresponding to the target concept of the user, through interactions between the user and the retrieval engine. The target concept might be one or several frame sub-regions, frames, scenes, shots or even full sequences. Based on the indexed data, a visual information method then basically includes a query formulation by the user, a classification of the candidate data by the retrieval engine and a results presentation to the user, as presented in Fig.1.

The query formulation may comprise an explicit definition of the target concept using the description features (e.g. colour definition or humanly understandable keywords), a sketch or an example selection (frame, scenes, image region etc). The latter case is known as "query by example".

The classification aims at evaluating the similarity of each candidate to the target concept. Numerous pattern classification techniques exist to solve that issue (neural networks, support vector machines, Bayesian classifiers etc), depending on the considered concept (image region, frame, scene, sequence...) as described for example by R. O. Duda et Al. in "Pattern Classification, Second Edition," John Wiley and Sons, New York, USA, 2001. The output of the classification is a measure, for each candidate, of the similarity to the user target concept. In some cases this similarity score can be numerical so that ranking of the candidates is possible.

Since the user target concept cannot always be directly expressed from the indexation features, the retrieval system must often include a learning engine, which aims at learning the target concept and an appropriate similarity measure. A common semi-supervised learning technique is known as relevance feedback as described for example by Y. Rui et al. in "Relevance Feedback: A Power Tool for Interactive Content-Based Image Retrieval," IEEE Trans. Circuits and Systems for Video Technology, vol.8(5) 1998, which consists of asking the user to judge the relevance of some presented candidates, through labelling or scoring. This user information is then exploited to refine the definition of the target concept and/or the similarity measure and, consequently, enhancing the classification performances at the next iteration.
Relevance feedback can be further boosted by using active learning, i.e. an optimal selection of the candidates to be presented to the user for scoring, so that the information gain is maximized at each iteration (see for example C. Zhang et Al. in "An Active Learning Framework for Content-Based Information Retrieval," IEEE Trans. Multimedia, vol. 4 (2), 2002). The optimal selection is based on the incertitude that each candidate matches the target concept, which can be derived from its similarity measure.

One example of such content-based retrieval methods is described in US patent 5,734,893, which relates to content-based retrieval of images in large databases. This document describes a general way to perform such operation. A first query is sent to a server, which retrieves a first set of pertinent images. The retrieved images are sent to the client which gives feedback on the pertinence of the retrieved images. The server uses this feedback to refine the results, and the operation is performed again until the results are said pertinent by the client. This document mainly aims at minimising the retrieval time on the server side. However, a drawback of the proposed method is that the communication load between client and server is not optimised, neither is the way the retrieved images are compressed, nor the way the feedback is given.

In order to further decrease the processing load on the server side, some authors, such as described in European patent application EP1548616, perform the content analysis on the compressed images instead of doing so directly on the images.

The same kind of query/retrieval procedure can be applied to other kind of multimedia content. For example, US patent application US 2007/0169613 describes such a method on music content. Chih-Chin Liu et al. describe in "Proceedings of the 10th International Conference on Information and Knowledge Management", pp. 506-511, such a method applied to MP3 coded sound data.

In the case of browsing very large images, document WO2004/102415 describes how to optimise the transmission load between client and server by only sending regions of interest in best resolution level. This document also describes how to take advantages of the JPEG 2000 compression standard to obtain such an optimisation and avoid redundancy in the transmitted data.

### Aims of the Invention

The present invention aims to provide a data retrieval method that overcomes the above mentioned drawbacks of the prior art solutions.

The invention further aims to provide a system implementing the method as well as a user interface.

### Summary of the Invention

The present invention relates to a method for improved retrieval of a set of data represented with at least two representation levels, said set of data comprising at least two data subsets, said method comprising the steps of:
a. Receiving a request for retrieval,
b. Creating a ranking of said at least two data subsets based on said request,
c. Selecting for each data subset a data subset representation level among said at least two representation levels in accordance with said ranking,
d. Retrieving said data subsets with said selected representation level.

One advantage of such a method is a reduction of transmission load between a client and a server in a query/ retrieval process, as only most pertinent items are transmitted with highest quality. Another advantage is the reduction of the processing load on the client side, for the same reason.

In preferred embodiment the set of data is a set of multimedia data, such as images, video sequences, sound, music,... Preferably the set of data comprises compressed images. Advantageously the images are then compressed according to the JPEG 2000 standard.

In another embodiment the data comprises compressed frames extracted from video data. The video data is then advantageously encoded using the MPEG 2000 standard. Alternatively the data is compressed sound, optionally compressed with the MP3 standard.

In a preferred embodiment the representation levels are based on different resolution or quality levels.

In another aspect the invention relates to a program, executable on a programmable device containing instructions, which, when executed, perform the method as previously described.

In a further aspect the invention relates to a system for retrieval of a set of data represented with at least two representation levels, said set of data comprising at least two data subsets. The system comprises
- communication means arranged for communicating with a user terminal,
- processing means arranged for processing a data retrieval request and for creating a ranking of the data subsets,
- storage means for storing at least the data comprising data subsets and the representation levels,
- selection means for selecting a representation level for the data subsets.

Advantageously the retrieval system further comprises a user terminal at least arranged for sending a data retrieval request.

### Brief Description of the Drawings

Fig. 1 represents the data organisation within the server's database, with corresponding representation level.

Fig. 2 represents the data organisation within the server's database, with corresponding representation level in the case of scalable format such as JPEG 2000

Fig. 3 illustrates a distributed client/server environment in which a client formulates a query and transmits this query to the server. The server then processes the query, ranks the results and sends the results with the specific representation level to the client for representation and feedback if needed.

Fig. 4 represents a play an excerpt view.

Fig. 5 represents a static matrix view.

Fig. 6 illustrates results representation with different representation level.

Fig. 7 represents an explicit request creation, by drawing a bounding box with the mouse.

Fig. 8 represents key-frames scoring (positive or negative) on a static matrix view.

Fig. 9 represents a magnifying glass effect when passing with the mouse on a key-frame.

Fig. 10 represents a magnifying glass effect when passing with the mouse on an image region.

Fig. 11 represents visual features re-weighting with cursors.

### Detailed Description of the Invention

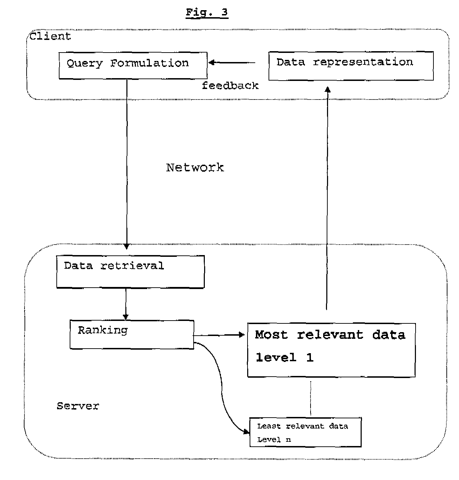

The proposed method for data retrieval comprises the following steps.
a. The video or image content is encoded with a scalable scheme allowing up to lossless or high quality recovery of the original content. The encoded data stream consists of several layers, each corresponding to a level of quality or resolution of the original visual content.
b. The content is indexed using state-of-the-art techniques, which allow establishing a relevance of the content layers to potential client queries.
c. A retrieval query is formulated by the client and transmitted to a server where the image or video content is stored. The server can be either remote or co-located with the client query application.
d. Based on the query, the server application establishes a hierarchy between the images or the video frames as well as their levels. The hierarchy reflects the priority of the available data layers to be transmitted to the client as answer to its retrieval query.
e. The server selects the data layers according to this hierarchy.
f. The server transmits the selected data to the client application.
g. The client application receives and decodes the transmitted content.
h. The client application displays the decoded content layers. Its display engine allows respecting the defined hierarchy.
i. This process can be repeated several times until the retrieval results satisfy the user. This general schedule is presented in Fig. 3. In the following more implementation details are provided.

Before that queries can be treated by the system, the data is to be pre-processed, so that it is coded on different quality levels. For example, it can be video sequences that are represented by key-frames, those key-frames then being compressed at different resolution levels as represented in Fig.1. An example of such compression at different levels is that obtained by JPEG 2000. In that case, the scalable format allows having the different representation levels in single file for each image, as represented in Fig.2. An interesting feature of this compression standard is that the different compression levels are coded on a single file, different segments of said file representing different parts and/or different resolution levels of the same image as described in the JPEG 2000 (see document JPEG 2000 FINAL COMMITTEE DRAFT VERSION 1.0, 16 MARCH 2000 for more details).

Once the storage server receives a retrieval query, it must establish a ranking of the data and their representation must be transmitted to the client application. The ranking is given by measuring the relevance between the candidate data and the received query. Ranking can be obtained by one of the methods described in the state of the art.

The data representation level sent to the client is related to the obtained ranking: the most relevant data is sent with highest representation level and the least relevant data is sent with lowest representation level.

The results are then submitted to the user on the client side who optionally modifies the ranking and then gives feedback to the server in order to refine the retrieval procedure.

Such an iterative procedure is performed until the desired set of data is obtained.

Another advantage of the present invention is that the best resolution is given to most relevant data, the attention of the user is also attracted to this ranking, so that feedback by the user is also optimised.

### Description of a Preferred Embodiment of the Invention

In a preferred embodiment of the invention, the data is encoded video content using the Motion JPEG 2000 standard. Each frame being compressed separately, with at least 2 resolution levels and 2 quality layers. The precinct size is set to the dimension of the bounding box of the smallest indexed sub-region so that maximum 4 precincts are needed to cover this smallest frame region. Definition of specific terms here should be understood by the definition given in the document JPEG 2000 FINAL COMMITTEE DRAFT VERSION 1.0, 16 MARCH 2000.

Precints are defined in the JPEG 2000 standard as a sub-division of a tile-component, within each resolution, used for limiting the size of packets, a packet being defined as a part of the bit stream comprising a packet header and the coded data from one layer of one decomposition level of one component of a tile. A tile is a rectangular array of points on the reference grid, registered with and offset from the reference grid origin and defined by a base width and height. This tile overlaps the image area and is used to define image tiles and tilecomponents.

The video frames are indexed using state-of-the art techniques. In the case of region-based image of video retrieval, the dimension and position of the bounding box of each frame sub-region is stored in a frame index.

Once the storage server receives a retrieval query, it must attribute a priority level to the data and their layers that must be transmitted to the client application. The hierarchy is given by measuring relevance between the candidate data layers and the received query.

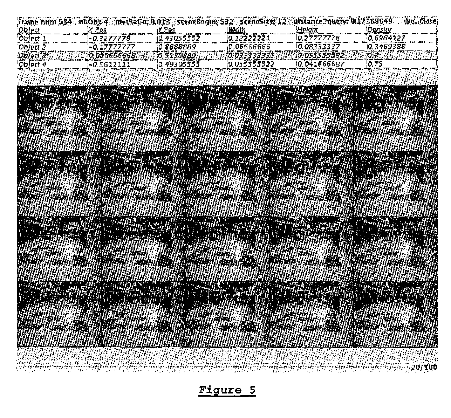

If a contextual matrix view is enabled as shown in Fig.5, the user can specify his required temporal sub-sampling in order to dimension the storyboard. Contrarily to the method presented in prior art, the matrix is not static but is obtained after decompression of each key-frames independently. This allows a dynamic re-organisation of the key-frames based on the user temporal sub-sampling. The temporal sub-sampling defines a display size for each key-frame. The user application only decodes the JPEG 2000 data associated to the corresponding resolution level.

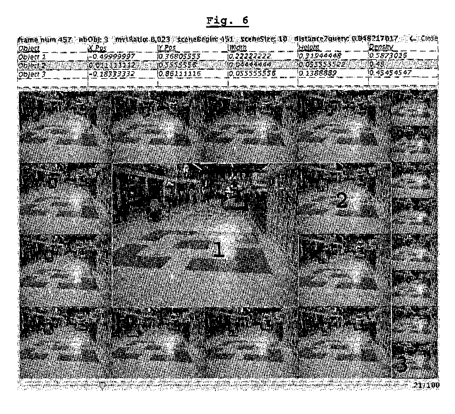

If a multi-resolution display is enabled as shown in Fig.6, supposing the frames are ranked, the first key-frame (1) is displayed centrally with full resolution and highest visual quality. This is obtained by decoding all the JPEG 2000 packets available at the storage side for these key-frames. The next 12 frames (2) are placed around the central frame, at a quarter of the full size and with at a lower quality level. The organisation is repeated for the next frames (3) with decreasing resolution and quality levels. The server only sends the JPEG 2000 packets corresponding to the needed resolution and quality levels.

Beyond the state-of-the-art similarity-based spiral display, the method and system of the present invention enable incertitude-based spiral display. In that case the most uncertain key-frame (lowest ranking) appears central at full resolution, with the highest visual quality. This is used in the case of active learning, so that the user attention is first attracted to the most unknown frames and he will be tempted to score them in priority.

The interface is illustrated using a surveillance video example, which is considered as one of the richest use cases. Obviously, the method and the interface can be utilized in different application domains.

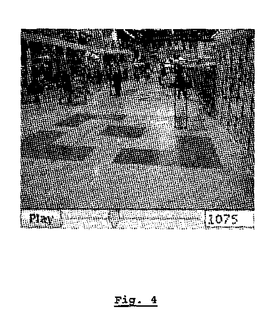

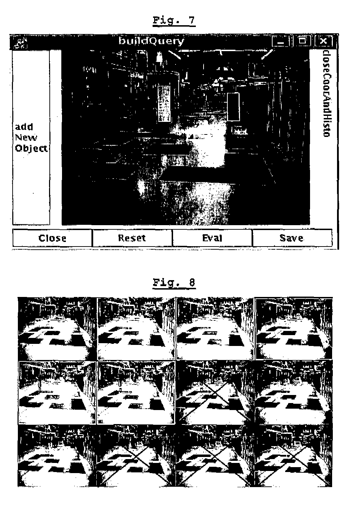

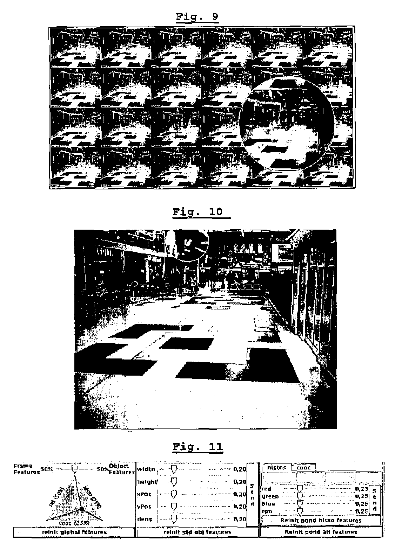

State-of-the-art functionalities remain available such as playing a sequence excerpt (Fig.4), static matrix layout (Fig.5), similarity-based spiral layout (Fig.6) or magnifying glass effect on key-frames (Fig.9) or frame regions (Fig.10). Explicit query formulation is achieved with the mouse (e.g. by drawing a box defining a region as in Fig.7). Basic relevance feedback actions such as key-frame scoring (Fig.8) and visual features re-weighting with cursors (Fig.11).

## Claims

1. A method for retrieval of a set of data represented with at least two representation levels, said set of data comprising at least two data subsets, said method comprising steps of:
a. Receiving a request for retrieval,
b. Creating a ranking of said at least two data subsets based on said request,
c. Selecting for each data subset a data subset representation level among said at least two representation level in accordance with said ranking,
d. Retrieving said data subsets with said selected representation level.

2. The method according to claim 1, wherein said set of data comprises compressed images.

3. The method according to claim 2, wherein said set of images are compressed according to JPEG 2000 method.

4. The method according to any of previous claims, wherein said set of compressed frames extracted from video data.

5. The method according to claim 4 wherein said video is encoded using MPEG 2000 method.

6. The method according to claim 1 wherein the data is compressed sound.

7. The method according to claim 6 wherein the data is compressed using MP3.

8. The method according to any of previous claims wherein the representation levels are based on resolution or quality levels.

9. A program, executable on a programmable device containing instructions, which when executed, perform the method as in any of the previous claims.

10. A system for retrieval of a set of data represented with at least two representation levels, said set of data comprising at least two data subsets, said system comprising :
- communication means arranged for communicating with a user terminal,
- processing means arranged for processing a data retrieval request and for creating a ranking of said data subsets,
- storage means for storing at least said data comprising data subsets and said representation levels,
- selection means for selecting a representation level for said data subsets.
